(19) Europäisches Patentamt
European Patent Office
Office européen des brevets

(11) EP 0 731 137 B1

(12) **FASCICULE DE BREVET EUROPEEN**

(45) Date de publication et mention de la délivrance du brevet:
**01.04.1998 Bulletin 1998/14**

(51) Int Cl.[6]: **C08L 51/08**, C09D 151/08, C08F 283/12

(21) Numéro de dépôt: **96420018.2**

(22) Date de dépôt: **15.01.1996**

(54) **Utilisation à titre d'antiadhérent et/ou d'hydrofugeant de polyorganosiloxanes fonctionnalisés, greffés**

Verwendung von funktionalisierten, gepropften Polyorganosiloxanen als Trennmittel und/oder Hydrophobierungsmittel

Use of functionalized, grafted polyorganosiloxanes as release and/or hydrophobic agent

(84) Etats contractants désignés:
**AT BE CH DE DK ES FR GB GR IE IT LI LU NL PT SE**

(30) Priorité: **16.01.1995 FR 9500611**

(43) Date de publication de la demande:
**11.09.1996 Bulletin 1996/37**

(73) Titulaire: **RHONE-POULENC CHIMIE**
**92408 Courbevoie Cédex (FR)**

(72) Inventeurs:
- **Ariagno, Daniel**
  **F-69290 Craponne (FR)**
- **Lievre, André**
  **F-69230 Saint-Genis Laval (FR)**
- **Michael, Theresa**
  **F-92300 Levallois Perret (FR)**
- **Richard, Joel**
  **F-60500 Chantilly (FR)**

(74) Mandataire: **Fleurance, Raphael**
**Cabinet Beau de Loménie,**
**51, Avenue Jean Jaurès,**
**B.P. 7073**
**69301 Lyon Cédex 07 (FR)**

(56) Documents cités:
**EP-A- 0 273 448**
**EP-A- 0 541 395**
**EP-A- 0 635 526**
**DE-A- 4 240 108**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

Le domaine de la présente invention est celui des applications de copolymères particuliers comprenant au moins un silicone de type polyorganosiloxane (POS) fonctionnalisé et au moins une unité récurrente éthyléniquement insaturée et susceptible de polymériser par voie radicalaire. Dans le cadre de l'invention, on s'est plus particulièrement focaliser sur les fonctionnalités anti-adhérentes et/ou hydrofugeantes de ces copolymères. Plus précisément encore, l'invention vise des agents antiadhérents et/ou hydrofugeants à base desdits copolymères en l'état ou sous forme de dispersion aqueuse, ainsi que les compositions contenant ces agents et utiles pour la réalisation de revêtements antiadhérents, et/ou hydrofugeants pour tous supports solides (e.g. papier, carton, matériaux fibreux tissés ou non).

On connaît déjà, notamment par le brevet **US N° 3 575 910**, des copolymères siloxane-acrylate et des dispersions aqueuses de ceux-ci. Ce document décrit en particulier un copolymère siloxane greffé acrylate, dans lequel le siloxane comprend des motifs Si-Me, Si-Phe, Si-Vi, Si-diphe, Si-diMe (Me = $-CH_3$ ; Phe = $C_6 H_5$ ; Vi = Vinyle). En émulsion avec un extrait sec de 10 %, ces copolymères sont testés comme revêtement anti-adhérent de papier Kraft. Les résultats obtenus sont relativement peu satisfaisants.

La demande de brevet européen **N° 0 541 395** décrit des agents de revêtement obtenus à partir d'une émulsion aqueuse de copolymères polysiloxane-polyvinyl greffés, lesquels agents se singularisant par la présence d'unités siloxanes particulières. En particulier, les revêtements réalisés présentent de modestes caractéristiques de non-mouillabilité et de tenue à l'eau. En outre, ils se sont avérés relativement onéreux. En réalité, ces polyorganosiloxanes sont de nature cyclique et comportent des greffons formés par des motifs méthacryliques, époxyalkyles et alkyles, notamment. Le comonomère associé à ce monomère cyclopolysiloxane est du type acrylate ou styrène, par exemple. Les propriétés anti-adhérentes de ces copolymères cyclosiloxanes fonctionnalisés-vinyles greffés, ont été comparées avec celles de cyclopolysiloxanes témoins. Il existe certes une différence de performances sur le plan de l'antiadhérence, mais celle-ci gagnerait à être encore plus prononcée.

Il ressort de cette revue de l'état de la technique que la fonctionnalité anti-adhésive des copolymères POS greffé par un monomère éthyléniquement insaturé (acrylate e.g.) est connue mais que l'on se satisfait jusqu'à maintenant de faibles niveaux de performance en anti-adhésion. Outre cette insuffisance, il semblerait que les copolymères siloxanes-monomères insaturés greffés connus, ne présentent pas des caractéristiques avantageuses de non mouillabilité et de tenue à l'eau. Enfin, ces carences fonctionnelles ne sont malheureusement pas compensées par des atouts économiques.

Dans cet état de connaissances, l'un des objectifs essentiels de l'invention est de fournir un nouvel agent anti-adhérent et/ou hydrofugeant offrant un bon compromis technique entre les propriétés d'anti-adhérence, de non mouillabilité et de tenue à l'eau, d'une part, et le coût de revient, d'autre part.

Un autre objectif de l'invention est de fournir une nouvelle utilisation d'un copolymère POS-comonomère insaturé, dans des applications techniques, où l'on vise non seulement l'anti-adhérence, mais également des propriétés connexes d'hydrophobicité et d'oléophobicité i.e. de non mouillabilité et de tenue à l'eau, toutes aussi indispensables.

Un autre objectif de l'invention est de fournir un support solide, par exemple en papier, carton ou analogue ou bien encore en polymère synthétique (feuille) en matériau fibreux tissé ou non, revêtu d'au moins une couche anti-adhérente et/ou hydrofugeante à base du nouvel agent sus-visé.

Un autre objectif essentiel de l'invention est de fournir une nouvelle utilisation d'un copolymère POS-monomère insaturé connu, à titre de nouvel agent anti-adhérent et/ou hydrofugeant, qui soit parfaitement compétitif sur le plan économique.

Ces objectifs, parmi d'autres, sont atteints par la présente invention qui concerne, tout d'abord, l'utilisation, à titre d'anti-adhérent et/ou hydrofugeant, de polyorganosiloxanes fonctionnalisés greffés et comprenant des motifs copolymères greffés, dérivés d'au moins un monomère éthyléniquement insaturé susceptible de polymériser par voie radicalaire et d'un polyorganosiloxane **(I)** fonctionnalisé contenant des motifs **(I)** semblables ou différents de formule **(I)** suivante :

$$R_a Y_b X_c \, Si \, O_{(4-a-b-c)/2} \qquad \textbf{(I)}$$

formule dans laquelle :

- les symboles R sont semblables ou différents et représentent un groupe alkyle en $C_1$-$C_{18}$ linéaires ou ramifié, un groupe alcényle en $C_2$-$C_{20}$ linéaire ou ramifié, un groupe aryle ou aralkyle en $C_6$-$C_{12}$, éventuellement substitué, de préférence par des atomes d'halogène ;
- les symboles X sont semblables ou différents et représentent une fonction réactive liée à un atome de silicium par une liaison Si-C ou Si-O-C ;
- les symboles Y sont semblables ou différents et représentent un reste hydrocarboné éthyléniquement insaturé,

pouvant contenir un ou plusieurs hétéroélément(s) O ou N, lequel reste étant lié à un atome de silicium du motif de formule **(I)** par une liaison Si-C et étant susceptible de réagir par voie radicalaire avec ledit ou lesdits monomère (s) éthyléniquement insaturé(s) ;

- a, b et c sont égaux à 0, 1, 2 ou 3 ;
- a + b + c = 0, 1, 2 ou 3 ;

le taux de motifs $SiO_{4/2}$ étant inférieur à 30 % en mole ;

le nombre de motifs de formule **(I)** dans lesquels l'atome de silicium porte une fonction X et/ou un reste Y, étant tel que lesdits polyorganosiloxanes contiennent :

- au moins 1 milliéquivalent, de préférence de 5 à 500 milliéquivalents, et plus préférentiellement encore de 5 à 100 milliéquivalents de fonctions X pour 100 grammes de polyorganosiloxane de formule **(I)**,
- au moins 5 milliéquivalents, de préférence de 10 à 500 milliéquivalents, de restes Y pour 100 grammes de polyorganosiloxane de formule **(I)**,

caractérisée en ce que la fonction réactive X de **(I)** est un groupe hydrocarboné époxyfonctionnel contenant de 2 à 20 atomes de carbone.

Il est donc du mérite de la Demanderesse d'avoir mis à jour une nouvelle utilisation de copolymères POS-monomère éthyléniquement insaturé, spécifiquement sélectionnés parmi ceux dont l'unité récurrente POS comprend, outre la fonction réactive (éthyléniquement insaturée) de copolymérisation, au moins un autre greffon pendant X, comportant au moins une fonction époxyde. Ce groupe restreint de copolymères greffés a été judicieusement isolé, de manière tout à fait surprenante et inattendue, après de nombreux travaux et recherches.

Ces copolymères sont doués de tout un éventail de propriétés se cumulant avec celles d'anti-adhérence et d'hydrofugation, qui s'expriment d'ailleurs de manière optimale dans le cadre de cette nouvelle utilisation originale conforme à l'invention.

Cette propriété d'hydrofugation, connexe à l'antiadhérence, est particulièrement appréciable car elle est à l'origine de la non-mouillabilité (hydrophobie/d'oléophobie), et subséquemment de fonctions de type antisalissure ou antimaculage pour des supports fibreux ou non de toute nature, qui comprendraient les copolymères en question par exemple, sous forme de revêtement de surface (e.g., revêtements anti-adhérents pour papiers/cartons). Enfin, puisque cette nouvelle utilisation fait intervenir des produits copolymères POS-insaturés ethyléniques connus et disponibles, elle est économique.

La propriété d'hydrofugation caractéristique de l'invention n'est pas incompatible avec des propriétés satisfaisantes "d'imprimabilité" et "d'écritabilité", pour des revêtements contenant les produits copolymères selon l'invention.

Conformément à un mode préféré de mise en oeuvre de l'invention, le polyorganosiloxane fonctionnalisé greffé que l'on sélectionne, a une structure linéaire.

Avantageusement, les POS linéaires présentent des longueurs de chaînes de 10 à 30 atomes de silicium, de préférence 15 à 25, et plus préférablement encore d'environ 20.

Les polyorganosiloxanes contenant les motifs de formule **(I)** peuvent dans leur forme linéaire, présenter jusqu'à 50 % en poids de ramification (motifs autres que des motifs "D"), ou des polymères tridimentionnels (résine).

Pour poursuivre la définition non limitative des copolymères POS-monomère insaturé, on précise que le reste Y qu'ils comprennent dans **(I)** est un groupe -y-Y', où :

. y représente un radical polyvalent alkylène linéaire ou ramifié en $C_1$-$C_{18}$, éventuellement prolongé par des restes bivalents éthylènamine ou polyéthylèneamine, oxyalkylène ou polyoxlyalkylène en $C_1$-$C_3$ éventuellement substitué par un radical hydroxy, hydroxycyclohexylène...

. Y' représente un radical alcénylcarbonyloxy.

Comme exemple de radicaux Y' alcénylcarbonyloxy, on peut citer l'acrylyoxy le méthacryloxy...

A titre d'illustration de y, on mentionnera :

$-CH_2-$ $-(CH_2)_2-$ $-(CH_2)_3-$ $-CH_2-CH(CH_3)-CH_2-$ $-(CH_2)_3-NH-CH_2-CH_2-$ $-(CH_2)_3-OCH_2-$ $-(CH_2)_3-(OCH_2-CH_2)_{29}-$ $-(CH_2)_3-[O-CH_2-CH(CH_3))-]-$ $-(CH_2)_3-O-CH_2CH(OH)CH_2-$ $-(CH_2)_2-C_6H_9(OH)-$

Les groupes X hydrocarbonés époxyfonctionnels peuvent être, entre autres, le 3-glycidoxypropyle, le 4-éthane diyle(1,2-époxycyclohexyle)....

Cette fonction réactive X est susceptible de réagir chimiquement par condensation ou polycondensation ou déshydrogénopolycondensation, éventuellement sous l'action de la chaleur de radiation, de faisceau d'électron et/ou à l'aide d'un catalyseur.

Parmi les radicaux R figurant dans la formule **(I)**, on peut citer les groupes méthyle, éthyle, octyle, trifluoropropyle,

vinyle, hexényle, phényle... De préférence, au moins 80 % molaire desdits radicaux R représentent un groupe méthyle.

Parmi les monomères éthyléniquement insaturés dont dérivent lesdits polyorganosiloxanes fonctionnalisés greffés, on peut citer ceux du type :

. les esters monéthyléniquement insaturés d'acide carboxylique saturé (acétate, propionate, butyrate, stéarate, benzoate... de vinyle),
. les esters saturés et amides d'acide carboxylique monoéthyléniquement insaturés (acrylate et méthacrylate d'alkyle en $C_1$-$C_{20}$ tels que méthyle, butyle, heptyle, propyle, heptadécanyle... acrylamide, méthacrylamide...).
. les nitriles monoéthyléniquement insaturés (acrylonitrile, méthacrylonitrile...)
. les acides carboxyliques monoéthyléniquement insaturés (acide acrylique, méthacrylique, itaconique, maleique...).
. les hydroxyalkyles- ou aminoalkyles-esters d'acides carboxyliques monoéthyléniquement insaturés (acrylate d'hydroxyéthyle, hydroxypropyle.... méthacrylate de 2-aminoéthyle...).
. les monomères vinylaromatiques (styrène, vinyltoluène...)
. l'acrylate ou méthacrylate de dicyclopentadiényle...

Compte tenu de leur mode de préparation préféré, les polyorganosiloxanes utilisés selon l'invention se présentent avantageusement sous forme de dispersion aqueuse réactive stable, ayant généralement un extrait sec de l'ordre de 5 à 60 %, de préférence de l'ordre de 25 à 50 % en poids.

Ces dispersions aqueuses, utilisées selon l'invention, peuvent être obtenues par polymérisation radicalaire en émulsion aqueuse ou en microsuspension d'au moins un monomère éthyléniquement insaturé en présence dudit polyorganosiloxane fonctionnalisé contenant des motifs semblables ou différents de formule **(I)**.

Les quantités respectives de monomère éthyléniquement insaturé et de polyorganosiloxane fonctionnalisé pouvant être mises en oeuvre, correspondent à un rapport pondéral monomère / polyorganosiloxane de l'ordre de 98-50/2-50, de préférence de l'ordre de 95-75/5-25.

L'opération de polymérisation est réalisée en présence d'agents émulsifiants et d'un amorceur de polymérisation par voie radicalaire.

Parmi les agents émulsifiants pouvant être mis en oeuvre, seuls ou en mélange, on peut citer les agents anioniques classiques tels que les sels d'acides gras, les alkylsulfates, les alkylsulfonates, les alkylarylsulfonates, les sulfosuccinates, les alkylphosphates de métaux alcalins, les sels de l'acide abiétique hydrogénés ou non, les agents non-ioniques tels que les alcools gras polyéthoxylés, les alkylphénols polyéthoxylés et éventuellement sulfatés, les acides gras polyéthoxylés...

Ceux-ci peuvent être utilisés à raison de 0,1 à 3 % en poids par rapport au poids total de monomère éthyléniquement insaturé et polyorganosiloxane fonctionnalisé.

Les amorceurs pouvant être mis en oeuvre sont du type hydrosolubles ou hydrodispersables comme les hydropéroxydes, tels que l'eau oxygénée, l'hydropéroxyde de cumène, l'hydroperoxyde de tertiobutyle, l'hydropéroxyde de diisopropylbenzène, les persulfates tels que le persulfate de sodium, le persulfate de potassium, le persulfate d'ammonium...

Ceux-ci peuvent être utilisés à raison de 0,01 à 4 %, de préférence de 0,05 à 2% en poids par rapport au poids total de monomère éthyléniquement insaturé et de polyorganosiloxane fonctionnalisé.

Ces amorceurs sont éventuellement associés à un réducteur, tel que les bisulfites ou le formaldéhydesulfoxylate de sodium, les polyéthylènes amines, les sucres tels que dextrose, saccharose, les sels métalliques de l'acide ascorbique. Les quantités de réducteur utilisées peuvent aller jusqu'à 3 % en poids par rapport au poids du mélange monomère(s) + polyorganosiloxane fonctionnalisé.

Des agents limiteurs de chaîne peuvent éventuellement être présents dans des proportions allant de 0 à 3 % en poids par rapport au mélange monomère(s) + polyorganosiloxane fonctionnalisé. Ils sont généralement choisis parmi les mercaptans tels que N-dodécylmercaptan, le tertiododécylmercaptan ; le cyclohexène ; les hydrocarbures halogénés tels que le chloroforme, le bromoforme, le tetrachlorure de carbone, le tetrabromure de carbone ; les dimères de l' $\alpha$-méthylstyrène...

L'opération de polymérisation peut être réalisée selon plusieurs modes opératoires différents.

Un premier mode de réalisation consiste à

- homogénéiser un mélange monomère(s) éthyléniquement insaturé(s)/polyorganosiloxane fonctionnalisé au sein d'un mélange eau/émulsifiant,
- et polymériser en présence d'un amorceur hydrosoluble ou hydrodispersable, à une température au moins égale à celle de décomposition dudit amorceur.

Un deuxième mode de réalisation consiste à

- introduire un mélange monomère(s) éthyléniquement insaturé(s)/amorceur hydrosoluble ou hydrodispersable au sein d'une émulsion aqueuse de polyorganosiloxane fonctionnalisé,
- et polymériser à une température au moins égale à celle de décomposition de l'amorceur.

Un autre mode de réalisation consiste à

- préémulsifier un mélange monomère(s) éthyléniquement insaturé(s)/polyorganosiloxane fonctionnalisé/amorceur organosoluble, au sein d'un mélange eau/émulsifiant,
- et polymériser à une température au moins égale à celle de décomposition dudit amorceur.

A titre d'exemples d'amorceurs organosolubles on peut citer les péroxydes organiques comme le péroxyde de lauroyle, de benzole, de tert-butyle... ; les azonitriles comme l'azobis-isobutyronitrile...

L'opération de polymérisation se déroule généralement à une température de l'ordre de 60 à 85° C.

Pour plus de précisions sur la structure et la préparation de ces polyorganosiloxanes fonctionnalisés mis en oeuvre dans le cadre de l'invention, on se référera à la demande de brevet européen n° 0 635 526 publiée le 25 Janvier 1995, laquelle est totalement incorporée à la présente demande par référence.

S'agissant de l'utilisation conforme à l'invention des susdits copolymères POS fonctionnalisé-comonomère éthyléniquement insaturé (e.g. acrylate), il est prévu, notamment de les mettre en oeuvre sous forme de dispersion aqueuse, en tant qu'agent anti-adhérent, dans une composition de revêtement de support solide.

Dans cette application on vise plus spécifiquement les revêtements anti-adhérents, de toutes natures, sur des supports solides quels qu'ils soient.

A titre d'exemples de support solide, on peut évoquer :

- les feuilles en matériau polymère synthétique (par exemple : polyéthylène, polyéthylène téréphtalate), en papier, carton ou analogues,
- les rubans adhésifs sur leur face non adhésive,
- les films intercalaires de ruban adhésif double-face.
- les supports fibreux (e.g. textiles) tissés ou non et/ou composites ou non.

Dans cette application les dispersions aqueuses d'enduction comprennent une quantité de polyorganosiloxane ≤ 40 % en poids par rapport au total, de préférence comprise entre 5 et 25 % en poids et, plus préférablement encore, de l'ordre de 15 % en poids.

L'extrait sec de l'émulsion est quant à lui inférieur ou égal à 60 %, de préférence compris entre 30 et 50 % en poids, et plus préférentiellement encore de l'ordre de 40 % par rapport à la masse totale.

L'enduction est réalisée de manière classique par "étendage" sur le support, puis séchage de la couche enduite par chauffage à une température comprise entre 100 et 200° C, de préférence de l'ordre de 150° C. Il va de soi que plusieurs couches superposées peuvent être réalisées. L'homme du métier est tout à fait à même de faire varier le taux de dépôt selon l'application visée, par exemple dans une fourchette comprise entre 2 et 8 g de composition de revêtement à base de copolymère par $m^2$.

Cette application selon l'invention permet donc d'obtenir un support solide au moins en partie revêtu de la dispersion aqueuse, telle que définie ci-dessus ; ledit support solide constituant un autre objet de la présente invention.

Dans cette application, les copolymères sélectionnés jouent, notamment, à la fois le rôle d'anti-adhérent et/ou d'hydrofugeant. Les revêtements qu'ils permettent d'obtenir confèrent au support enduit des propriétés d'antisalissure, d'antimaculage, grâce à leurs caractéristiques de non mouillabilité, qui leur procure notamment une certaine oléophobie. Ces revêtements ont également pour avantage d'être imprimables, écritables et marquables avec des encres de toutes natures.

Il va de soi que les propriétés de base d'antiadhérence et d'hydrofugation typiques de l'invention peuvent s'exprimer dans chaque application, mais ne sont pas forcément toutes deux exploitées ensemble. En effet, dans certains cas une seule des deux seulement, peut être utile.

Les exemples non limitatifs qui suivent permettront de mieux comprendre l'invention et d'en saisir certains de ses avantages et variantes de réalisation.

**EXEMPLES :**

**Exemple I : Caractérisation des propriétés fonctionnelles d'un des latex greffés silicone (L.G.S.) sélectionnés et exploitables, conformément à l'invention, dans une utilisation pour la réalisation d'un revêtement anti-adhérent sur papier :**

*I.1 Matériau utilisé*

Le copolymère acrylique greffé avec des silicones mis en oeuvre se présente sous forme d'émulsion à 40 % d'extrait sec (Latex greffé silicone ou LGS), ce dernier ayant la formulation suivante :

| | |
|---|---|
| méthacrylate de méthyle | 35 parties en poids |
| acrylate de butyle | 45 parties en poids |
| acide acrylique | 5 parties en poids |
| huile polydiméthylsiloxane (PDMS) greffée acrylate | 15 parties en poids. |

Ce copolymère POS-acrylate (ou LGS) est obtenu comme décrit ci-après :

On prépare une huile organopolysiloxane insaturée de formule moyenne suivante : titrant 31 meq/100 g de fonctions glycidyléther :

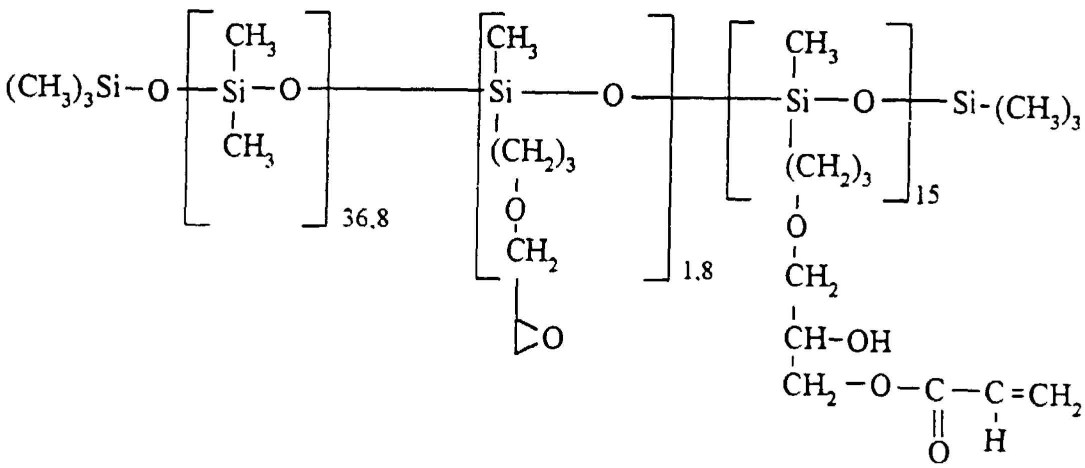

à partir des réactifs suivants :

- 100 g d'une huile polyorganosiloxane titrant 290 meq/100g de fonctions glycidyléther, de formule :

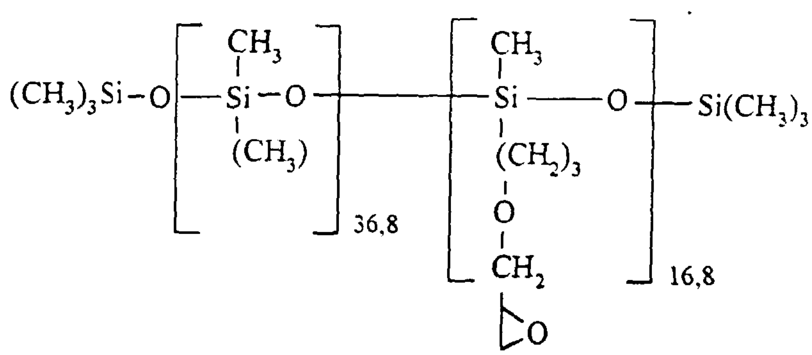

- 21 g d'acide acrylique
- 0,03 g d'hydroquinone (inhibiteur de polymérisation thermique)
- 0,2 g de 1,4 diazabicyclo [2,2,2] octane
- 50 g de toluène

La réaction est réalisée dans un réacteur sous azote, la température du milieu réactionnel étant portée et maintenue à 100° C jusqu'à ce qu'on observe par titrage un taux de conversion de la fonction oxirane d'environ 90 %.

On élimine par distillation sous pression réduite (266 Pa) les solvants et l'acide acrylique non réagi.

Préémulsion :

Dans un becher de 1 l on mélange :

- 141 g de méthacrylate de méthyle,
- 135 g d'acrylate de méthyle,
- et 9 g d'acide acrylique.

On ajoute sous agitation 15 g de l'huile organosiloxane insaturée préparée ci-dessus.

Le milieu est laissé sous agitation jusqu'à complète dissolution.

Dans un bécher, on mélange 180 g d'eau désionisée, 3,9 g d'une solution aqueuse de dodécylbenzenesulfonate de sodium (DBS-Na) 38,5 % en poids.

On introduit dans cette solution et sous agitation le mélange monomères acryliques / diorganopolysiloxane. Le mélange obtenu est émulsifié à l'aide d'un homogénéiseur de type ULTRA-TURAX® (commercialisé par PROLABO) pendant 5 minutes à 20000 tours/minute. On obtient ainsi une préemulsion des monomères et de l'huile silicone fonctionnalisée.

Polymerisation :

Dans un réacteur d'un litre, on introduit 198,5 g d'eau que l'on porte à 82° C sous agitation.

On ajoute ensuite :

- 20 g de la préémulsion préparée ci-dessus,
- 0,90 g de persulfate d'ammonium.

On attend 15 minutes pour que l'amorçage de la réaction s'effectue, puis on ajoute sur une durée de 4 heures, le reste de la préémulsion, soit 463,90 g. On laisse cuire à 82° C pendant 30 minutes. On refroidit à 60° C et on ajoute 0,42 g d'hydroperoxyde de tertiobutyle et 0,18 g de $Na_2S_2O_5$. On maintient la température à 60°C pendant 30 minutes et on refroidit à température ambiante. On neutralise avec une solution d'ammoniaque diluée à 20 %. On obtient un latex à 40 % d'extrait sec, qui présente une très bonne stabilité au stockage.

*I.2 Utilisation de ce latex pour la réalisation d'un revêtement antiadhérent.*

Le latex (LGS) obtenu en I.1. est mis en oeuvre tel quel pour l'enduction en couche mince d'un support cellulosique de type papier Kraft de grammage = 70 g/$m^2$.

Cette mise en oeuvre a été réalisée sur une machine pilote d'enduction.

L'enduction a été réalisée en utilisant la technique de "la barre de Meyer" et le séchage de la couche enduite obtenu par passage dans un four de 6m de long chauffe à 150°C. La vitesse de défilement fut de 40 m/mn.

Différents dépôts de LGS ont été réalisés sur le papier support.

Un essai témoin d'enduction a été effectué avec un latex de type Styrène Butadiène commercialisée par la Société RHONE POULENC sous la dénomination Rhodopas® SB023 (Marque déposée).

A - ANGLE DE GOUTTE

Une première caractérisation des propriétés thermodynamiques des surfaces des enductions est réalisée grâce à la technique de mesure de l'angle de goutte d'eau posée.

L'essai a été comparé au témoin.

Les résultats sont donnés ci-après :

| | Angle de goutte $\theta$ (°) |
|---|---|
| Témoin | 115,4 |
| Essai 3 | 118 |

Ces résultats montrent que la surface enduite LGS se mouille moins facilement que le témoin.

B - TENUE A L'EAU

Une évaluation de l'hydrofugation des surfaces enduites a été effectuée par une mesure de COBB/60 (méthode NF Q 03-035).

Les résultats reportés sur la courbe **COBB 60 = f (dépôt total)**. représentée sur la Fig. 1 annexée, montrent que le pouvoir hydrofugeant du latex greffé est au moins équivalent à celui du latex témoin.

C - ANTIADHERENCE

Une évaluation du pouvoir antiadhérent des enductions a été réalisée selon la méthode FINAT 3 en utilisant un ruban adhésif de marque Tesa Réf. 4651.

Les résultats rapportés sur la courbe **Force de décollement = f (dépôt total),** représentée sur la Fig. 2 annexée, montrent que les enductions réalisées avec le latex greffé apportent au support un caractère antiadhérent bien meilleur que le témoin.

D - COMMENTAIRES:

Les résultats précédents mettent en évidence qu'un support comme un papier kraft, par exemple, enduit avec le latex greffé silicone présente une amélioration du compromis hydrofugation/antiadhérence comparativement à un latex Styrène butadiène.

Ce bon compromis de performances apporté par le LGS pourrait par exemple trouver un usage dans les revêtements antiadhérents ou/et hydrofugeants pour supports poreux, supports papier/carton, comme agent antiadhérent pour supports fibreux non tissés (antisalissures - antimaculage).

**Exemple II : Incidence de la concentration en POS dans le copolymère LGS dans le cadre d'une utilisation au revêtement antiadhérence papier**

*II.1 Matières mises en oeuvre*

Les copolymères acryliques greffés avec différents taux de silicone mis en oeuvre se présentant sous forme d'émulsion à 40 % d'extrait sec (Latex greffé silicone ou LGS). Les formulations de ces extraits secs sont les suivantes :

| | | | | | |
|---|---|---|---|---|---|
| méthacrylate de méthyle | 52 p | 47 p | 47 p | 40 p | 35 p |
| acrylate de butyle | 45 p | 45 p | 45 p | 45 p | 45 p |
| acide acrylique | 3 p | 3 p | 3 p | 5 p | 5 p |
| huile PDMS greffée acrylate | 0 p | 3 p | 5 p | 10 p | 15 p |

L'huile PDMS est la même que celle de l'Exemple I.

*II.2 Utilisation de ces différents latex pour la réalisation de revêtements antiadhérents*

La mise en oeuvre a consisté à enduire, manuellement et en couche mince, ces produits après dilution dans l'eau, sur un support cellulosique de type papier en utilisant la technique de "la barre de Meyer".

Les enductions ont été séchées par passage dans une étuve ventilée 30°/130°C.

Formulation générale des bains d'enduction :

| | |
|---|---|
| Latex ou latex greffé silicone | 50 p |
| EAU | 50 p |

A- TENUE A L'EAU :

Une évaluation de l'hydrofugation des surfaces enduites a été effectuée par une mesure de COBB 60 (méthode NF Q 03-035).

Les résultats reportés sur le graphe **COBB 60 = f (% de silicone greffé dans le LGS)** représenté sur la Fig. 3 annexée, montrent que le pouvoir hydrofugeant (tenue à l'eau) du latex acrylique témoin est nettement amélioré par le greffage silicone, et ce de manière proportionnelle aux taux de greffage : Le COBB 60 diminue quand le taux de

greffage augmente.

B - ANTIADHERENCE :

Une évaluation du pouvoir antiadhérent des enductions a été réalisée selon la méthode FINAT 3 en utilisant un ruban adhésif de marque Tesa Réf 4651.

Les résultats rapportés sur le graphe **force de décollement = f (% de silicone greffé dans le LGS)** et représenté sur la Fig.4 annexée, montrent que le greffage de silicone sur un latex acrylique améliore nettement ses performances antiadhérentes, et ce en proportion du taux de greffage.

C - COMMENTAIRES :

Les résultats précédents mettent en évidence que le greffage de silicone époxyfonctionnalisé sur un latex acrylique améliore de manière importante son pouvoir hydrofugeant et antiadhérent.

## Revendications

1. Utilisation à titre d'anti-adhérent et/ou d'hydrofugeant de polyorganosiloxanes fonctionnalisés greffés et comprenant des motifs copolymères greffés dérivés d'au moins un monomère éthyléniquement insaturé susceptible de polymériser par voie radicalaire et d'un polyorganosiloxane **(I)** fonctionnalisé contenant des motifs **(I)** semblables ou différents de formule **(I)** suivante :

$$R_aY_bX_c\ Si\ O_{(4-a-b-c)/2} \qquad \textbf{(I)}$$

formule dans laquelle :

- les symboles R sont semblables ou différents et représentent un groupe alkyle en $C_1$-$C_{18}$ linéaire ou ramifié, un groupe alcényle en $C_2$-$C_{20}$ linéaire ou ramifié, un groupe aryle ou aralkyle en $C_6$-$C_{12}$, éventuellement substitué par des atomes d'halogène ;
- les symboles X sont semblables ou différents et représentent une fonction réactive liée à un atome de silicium par une liaison Si-C ou Si-O-C ;
- les symboles Y sont semblables ou différents et représentent un reste hydrocarboné éthyléniquement insaturé pouvant contenir un ou plusieurs hétéroélément(s) O ou N, lequel reste étant lié à un atome de silicium du motif de formule (I) par une liaison Si-C et étant susceptible de réagir par voie radicalaire avec ledit ou lesdits monomère(s) éthyléniquement insaturé(s) ;
- $\underline{a}$, $\underline{b}$ et $\underline{c}$ sont égaux à 0, 1, 2 ou 3 ;
- $\underline{a}$ + $\underline{b}$ + $\underline{c}$ = 0, 1, 2 ou 3 ;

le taux de motifs $SiO_{4/2}$ étant inférieur à 30 % en mole ;

le nombre de motifs de formule **(I)** dans lesquels l'atome de silicium porte une fonction X et/ou un reste Y, étant tel que lesdits polyorganosiloxanes contiennent :

- au moins 1 milliéquivalent, de préférence de 5 à 500 milliéquivalents, et plus préférentiellement encore de 5 à 100 milliéquivalents de fonctions X pour 100 grammes de polyorganosiloxane de formule **(I)**,
- au moins 5 milliéquivalents, de préférence de 10 à 500 milliéquivalents, de restes Y pour 100 grammes de polyorganosiloxane de formule **(I)**,

caractérisée en ce que la fonction réactive X de **(I)** est un groupe hydrocarboné époxyfonctionnel, contenant de 2 à 20 atomes de carbone.

2. Utilisation selon la revendication 1 caractérisée en ce que le polyorganosiloxane fonctionnalisé greffé est linéaire.

3. Utilisation selon la revendication 1 ou 2, caractérisée en ce que dans les polyorganosiloxanes fonctionnalisés greffés, le monomère éthyléniquement insaturé, dont dérivent lesdits polyorganosiloxanes fonctionnalisés greffés, est un ester monoéthyléniquement insaturé d'acide carboxylique saturé, un ester saturé ou amide d'acide carboxylique monoéthyléniquement insaturé, un nitrile monoéthyléniquement insaturé, un acide carboxylique monoéthyléniquement insaturé, un hydroxyalkyl- ou aminoalkyl-ester d'acide carboxylique monoéthylénique insaturé, un monomère vinylaromatique, l'acrylate ou le méthacrylate de dicyclopentadiényle...

**4.** Utilisation selon l'une quelconque des revendications 1 à 3, caractérisé en ce que dans les polyorganosiloxanes fonctionnalisés greffés le reste Y est un groupe -y-Y', où :

. y représente un radical polyvalent alkylène linéaire ou ramifié en $C_1$-$C_{18}$, éventuellement prolongé par des restes bivalents éthylène amine ou polyéthylèneamine, oxyalkylène ou polyoxyalkylène en $C_1$-$C_3$ éventuellement substitué par un radical hydroxy, hydroxycydohexylène...
. Y' représente un radical alcénylcarbonyloxy.

**5.** Utilisation selon l'une quelconque des revendications 1 à 4, caractérisée en ce que les polyorganosiloxanes fonctionnalisés greffés sont obtenus par polymérisation radicalaire en émulsion aqueuse ou en microsuspension d'au moins un monomère éthyléniquement insaturé en présence dudit polyorganosiloxane fonctionnalisé contenant des motifs semblables ou différents de formule **(I)**.

**6.** Utilisation selon la revendication 5, caractérisée en ce que les quantités respectives de monomère(s) éthyléniquement insaturé(s) et de polyorganosiloxane fonctionnalisé mises en oeuvre, correspondent à un rapport pondéral monomère / polyorganosiloxane de l'ordre de 98-50/2-50, de préférence de l'ordre de 95-75/5-25.

**7.** Utilisation selon la revendication 5 ou 6 caractérisée en ce que l'opération de polymérisation est réalisée en milieu aqueux en présence d'agents émulsifiants et d'un amorceur de polymérisation par voie radicalaire.

**8.** Utilisation selon la revendication 7, caractérisée en ce que les polyorganosiloxanes fonctionnalisés greffés sont obtenus selon un mode de réalisation consistant à homogénéiser un mélange monomère éthyléniquement insaturé / polyorganosiloxane fonctionnalisé au sein d'un mélange eau / émulsifiant et polymériser en présence d'un amorceur hydrosoluble ou hydrodispersable, à une température au moins égale à celle de décomposition dudit amorceur.

**9.** Utilisation selon la revendication 7, caractérisée en ce que les polyorganosiloxanes fonctionnalisés greffés sont obtenus selon un mode de réalisation consistant à introduire un mélange monomère éthyléniquement insaturé/ amorceur hydrosoluble ou hydrodispersable au sein d'une émulsion aqueuse de polyorganosiloxane fonctionnalisé et polymériser à une température au moins égale à celle de décomposition de l'amorceur.

**10.** Utilisation selon la revendication 7, caractérisée en ce que les polyorganosiloxanes fonctionnalisés greffés sont obtenus selon un mode de réalisation consistant à préémulsifier un mélange monomère(s) éthyléniquement insaturé(s) / polyorganosiloxane fonctionnalisé/amorceur organosoluble, au sein d'un mélange eau / émulsifiant et polymériser à une température au moins égale à celle de décomposition dudit amorceur.

**11.** Utilisation selon l'une quelconque des revendications 1 à 10, caractérisée en ce que les polyorganosiloxanes fonctionnalisés greffés sont mis en oeuvre, sous forme de dispersion aqueuse et en tant qu'agents anti-adhérents et hydrofugeants, dans une composition de revêtement imprimable, écritable et marquable de supports solides.

**12.** Utilisation selon la revendication 11, caractérisée en ce que la dispersion aqueuse est mise en oeuvre pour la réalisation d'un revêtement anti-adhérent sur un support solide, de préférence choisi

- parmi les feuilles en matériau polymère ou en papier, carton ou analogues,
- parmi les rubans adhésifs sur leur face non adhésive,
- parmi les films intercalaires de rubans adhésifs double face.
- ou parmi les supports fibreux tissés ou non et/ou composites ou non.

**13.** Support solide au moins en partie revêtu à l'aide de la dispersion aqueuse telle que définie dans la revendication 12.

**Patentansprüche**

**1.** Verwendung von gepfropften funktionalisierten Polyorganosiloxanen als Trennmittel und/oder Hydrophobiermittel, wobei diese Polyorganosiloxane gepfropfte Copolymereinheiten enthalten, welche sich von mindestens einem

ethylenisch ungesättigten Monomeren, das radikalisch polymerisiert werden kann, und einem funktionalisierten Polyorganosiloxan (I) ableiten, das gleiche oder verschiedene Einheiten (I) der folgenden Formel (I) aufweist:

$$R_a Y_b X_c\, Si\, O_{(4-a-b-c)/2} \quad (I),$$

in der:

- die Symbole R, die gleich oder verschieden sein können, eine geradkettige oder verzweigte $C_{1-18}$-Alkylgruppe, eine geradkettige oder verzweigte $C_{2-20}$-Alkenylgruppe oder eine $C_{6-12}$-Aryl- oder Arylalkylgruppe darstellen, wobei diese Gruppe gegebenenfalls mit Halogenatomen substituiert ist;
- die Symbole X, die gleich oder verschieden sein können, eine reaktive Gruppe darstellen, die über eine Si-C- oder Si-O-C-Bindung an ein Siliciumatom gebunden ist;
- die Symbole Y, die gleich oder verschieden sein können, einen ethylenisch ungesättigten Kohlenwasserstoffrest darstellen, der ein oder mehrere Heteroatome O oder N aufweisen kann, wobei dieser Rest, der über eine Si-C-Bindung an ein Siliciumatom der Einheit der obigen Formel (I) gebunden ist, zur radikalischen Reaktion mit dem beziehungsweise den ethylenisch ungesättigten Monomeren befähigt ist;
- a, b und c gleich 0, 1, 2 oder 3 sind;
- a + b + c = 0, 1, 2 oder 3;

wobei der Anteil an $SiO_{4/2}$-Einheiten weniger als 30 Mol-% beträgt und die Zahl der Einheiten der obigen Formel (I), in denen das Siliciumatom eine Gruppe X und/oder einen Rest Y trägt, dergestalt ist, daß die Polyorganosiloxane enthalten:

- mindestens 1, vorzugsweise 5 bis 500 und insbesondere 5 bis 100 Milliäquivalent der Gruppen X pro 100 Gramm des Polyorganosiloxans der Formel (I),
- mindestens 5 und vorzugsweise 10 bis 500 Milliäquivalent der Reste Y pro 100 Gramm des Polyorganosiloxans der Formel (I),

dadurch gekennzeichnet, daß die reaktive Gruppe X der Formel (I) eine Kohlenwasserstoffgruppe mit 2 bis 20 Kohlenstoffatomen ist, die eine Epoxyfunktion aufweist.

**2.** Verwendung nach Anspruch 1, dadurch gekennzeichnet, daß das gepfropfte funktionalisierte Polyorganosiloxan geradkettig ist.

**3.** Verwendung nach Anspruch 1 oder 2, dadurch gekennzeichnet, daß das ethylenisch ungesättigte Monomer der gepfropften funktionalisierten Polyorganosiloxane, von dem sich die gepfropften funktionalisierten Polyorganosiloxane ableiten, ein einfach ethylenisch ungesättigter Ester einer gesättigten Carbonsäure, ein gesättigter Ester oder ein Amid einer einfach ethylenisch ungesättigten Carbonsäure, ein einfach ethylenisch ungesättigtes Nitril, eine einfach ethylenisch ungesättigte Carbonsäure, ein Hydroxyalkylester oder ein Aminoalkylester einer einfach ethylenisch ungesättigten Carbonsäure, ein vinylaromatisches Monomer oder ein Dicyclopentadienylacrylat oder -methacrylat ist.

**4.** Verwendung nach einem der Ansprüche 1 bis 3, dadurch gekennzeichnet, daß der Rest Y der gepfropften funktionalisierten Polyorganosiloxane eine Gruppe -y-Y' ist, wobei in dieser Gruppe

- y eine geradkettige oder verzweigte mehrwertige $C_{1-18}$-Alkylengruppe darstellt, die gegebenenfalls mit zweiwertigen Ethylenamin- oder Polyethylenaminresten oder mit $C_{1-3}$-Oxyalkylen- oder Polyoxyalkylenresten verlängert ist und die gegebenenfalls mit einer Hydroxylgruppe oder einer Hydroxycyclohexylengruppe usw. substituiert ist; und
- Y' eine Alkenylcarbonyloxygruppe darstellt.

**5.** Verwendung nach einem der Ansprüche 1 bis 4, dadurch gekennzeichnet, daß die gepfropften funktionalisierten Polyorganosiloxane durch radikalische Polymerisation mindestens eines ethylenisch ungesättigten Monomeren in Gegenwart des funktionalisierten Polyorganosiloxans, das gleiche oder verschiedene Einheiten der Formel (I) enthält, in wässeriger Emulsion oder in Mikrosuspension hergestellt werden.

6. Verwendung nach Anspruch 5, dadurch gekennzeichnet, daß die Mengen, in denen das beziehungsweise die ethylenisch ungesättigten Monomeren und das funktionalisierte Polyorganosiloxan eingesetzt werden, einem Gewichtsverhältnis *Monomer/Polyorganosiloxan* im Bereich von 98/2 bis 50/50 und vorzugsweise von 95/5 bis 75/25 entsprechen.

7. Verwendung nach Anspruch 5 oder 6, dadurch gekennzeichnet, daß der Polymerisationsschritt in wässerigem Medium und in Gegenwart von Emulgatoren und eines Kettenstarters für radikalische Polymerisationen durchgeführt wird.

8. Verwendung nach Anspruch 7, dadurch gekennzeichnet, daß die gepfropften funktionalisierten Polyorganosiloxane entsprechend einer Ausführungsform hergestellt werden, die darin besteht, ein Gemisch des ethylenisch ungesättigen Monomeren mit dem funktionalisierten Polyorganosiloxan in einem Wasser-Emulgator-Gemisch zu homogenisieren und in Gegenwart eines wasserlöslichen oder in Wasser dispergierbaren Kettenstarters bei einer Temperatur, die mindestens gleich der Zerfallstemperatur des Kettenstarters ist, zu polymerisieren.

9. Verwendung nach Anspruch 7, dadurch gekennzeichnet, daß die gepfropften funktionalisierten Polyorganosiloxane entsprechend einer Ausführungsform hergestellt werden, die darin besteht, ein Gemisch des ethylenisch ungesättigen Monomeren mit dem wasserlöslichen oder in Wasser dispergierbaren Kettenstarter zu einer wässerigen Emulsion des funktionalisierten Polyorganosiloxans zu geben und bei einer Temperatur, die mindestens gleich der Zerfallstemperatur des Kettenstarters ist, zu polymerisieren.

10. Verwendung nach Anspruch 7, dadurch gekennzeichnet, daß die gepfropften funktionalisierten Polyorganosiloxane entsprechend einer Ausführungsform hergestellt werden, die darin besteht, ein Gemisch des beziehungsweise der ethylenisch ungesättigten Monomeren mit dem funktionalisierten Polyorganosiloxan und dem in organischen Lösungsmitteln löslichen Kettenstarter in einem Wasser-Emulgator-Gemisch vorzuemulgieren und bei einer Temperatur, die mindestens gleich der Zerfallstemperatur des Kettenstarters ist, zu polymerisieren.

11. Verwendung nach einem der Ansprüche 1 bis 10, dadurch gekennzeichnet, daß die gepfropften funktionalisierten Polyorganosiloxane in Form einer wässerigen Dispersion und, in ihrer Eigenschaft als Trennmittel und Hydrophobiermittel, in einer Zusammensetzung für bedruckbare, beschreibbare und zum Anstreichen geeignete Beschichtungen für feste Trägermaterialien eingesetzt werden.

12. Verwendung nach Anspruch 11, dadurch gekennzeichnet, daß die wässerige Dispersion zur Herstellung einer antiklebenden Beschichtung auf einem festen Trägermaterial verwendet wird, das vorzugsweise ausgewählt ist unter:

- Folien beziehungsweise Blättern aus polymerem Material oder aus Papier, Karton oder ähnlichem,
- Klebebändern auf ihrer nichtklebenden Seite,
- Filmen für die Zwischenschicht doppelseitiger Klebebänder und
- gewebten oder nicht gewebten und gegebenenfalls zusammengesetzten faserstoffhaltigen Trägermaterialien.

13. Festes Trägermaterial, das zumindest teilweise mit der in Anspruch 12 definierten wässerigen Dispersion beschichtet ist.

**Claims**

1. Use, as antiadhesive agents and/or water repellents, of grafted functionalised polyorganosiloxanes consisting of grafted copolymer moieties, derived from at least one ethylenically unsaturated monomer which may be polymerised via a radical route and from a functionalised polyorganosiloxane (I) containing similar or different moieties (I) of formula (I) below:

$$R_aY_bX_cSi\,O_{(4-a-b-c)/2} \quad (I)$$

in which formula:

- the symbols R are similar or different and represent a linear or branched $C_1$-$C_{18}$ alkyl group, a linear or branched $C_2$-$C_{20}$ alkenyl group, or a $C_6$-$C_{12}$ aryl or aralkyl group, optionally substituted with halogen atoms;
- the symbols X are similar or different and represent a reactive function linked to a silicon atom by an Si-C or Si-O-C bond;
- the symbols Y are similar or different and represent an ethylenically unsaturated hydrocarbon residue which may contain one or more hetero element(s) O or N, this residue being linked to a silicon atom of the moiety of formula (I) by an Si-C bond and being capable of reacting via a radical route with the said ethylenically unsaturated monomer(s);
- $\underline{a}$, $\underline{b}$ and $\underline{c}$ are equal to 0, 1, 2 or 3;
- $\underline{a} + \underline{b} + \underline{c}$ = 0, 1, 2 or 3;

the level of $SiO_{4/2}$ moieties being less than 30 mol%;

the number of moieties of formula (I) in which the silicon atom bears a function X and/or a residue Y being such that the said polyorganosiloxanes contain:

- at least 1 milliequivalent, preferably from 5 to 500 milliequivalents and even more preferably from 5 to 100 milliequivalents, of functions X per 100 grams of polyorganosiloxane of formula (I),
- at least 5 milliequivalents, preferably from 10 to 500 milliequivalents, of residues Y per 100 grams of polyorganosiloxane of formula (I),

characterised in that the reactive function X of (I) is an epoxyfunctional hydrocarbon group containing from 1 to 20 carbon atoms.

**2.** Use according to claim 1, characterised in that the grafted functionalised polyorganosiloxane is linear.

**3.** Use according to claim 1 or 2, characterised in that in the grafted functionalised polyorganosiloxanes, the ethylenically unsaturated monomer, from which the said grafted functionalised polyorganosiloxanes are derived, is a monoethylenically unsaturated ester of saturated carboxylic acid, an amide or saturated ester of a monoethylenically unsaturated carboxylic acid, a monoethylenically unsaturated nitrile, a monoethylenically unsaturated carboxylic acid, a hydroxyalkyl or aminoalkyl ester of a monoethylenically unsaturated carboxylic acid, a vinylaromatic monomer, a dicyclopentadienyl acrylate or methacrylate, etc.

**4.** Use according to any one of claims 1 to 3, characterised in that in the grafted functionalised polyorganosiloxanes, the residue Y is a group -y-Y', where:

- y represents a linear or branched $C_1$-$C_{18}$ polyvalent alkylene radical, optionally extended by divalent ethyleneamine or polyethyleneamine residues, or a $C_1$-$C_3$ oxyalkylene or polyoxyalkylene radical optionally substituted with a hydroxyl, hydroxycyclohexylene, etc. radical,
- Y' represents an alkenylcarbonyloxy radical.

**5.** Use according to any one of claims 1 to 4, characterised in that the grafted functionalised polyorganosiloxanes are obtained by radical polymerization in aqueous emulsion or in microsuspension of at least one ethylenically unsaturated monomer in the presence of the said functionalised polyorganosiloxane containing similar or different moieties of formula (I).

**6.** Use according to claim 5, characterised in that the respective amounts of ethylenically unsaturated monomer(s) and of functionalised polyorganosiloxane used correspond to a monomer/polyorganosiloxane weight ratio of about 98-50/2-50, preferably of about 95-75/5-25.

**7.** Use according to claim 5 or 6, characterised in that polymerization operation is performed in aqueous medium in the presence of emulsifying agents and of a polymerization initiator, via a radical route.

**8.** Use according to claim 7, characterised in that the grafted functionalised polyorganosiloxanes are obtained according to an embodiment which consists in homogenizing an ethylenically unsaturated monomer/functionalised polyorganosiloxane mixture in a water/ emulsifying agent mixture and polymerizing in the presence of a watersoluble or water-dispersible initiator, at a temperature at least equal to that of decomposition of the said initiator.

**9.** Use according to claim 7, characterised in that the grafted functionalised polyorganosiloxanes are obtained according to an embodiment which consists in introducing an ethylenically unsaturated monomer/water-soluble or water-dispersible initiator mixture into an aqueous emulsion of functionalised polyorganosiloxane and polymerizing at a temperature at least equal to that of decomposition of the initiator.

**10.** Use according to claim 7, characterised in that the grafted functionalised polyorganosiloxanes are obtained according to an embodiment which consists in pre-emulsifying an ethylenically unsaturated monomer(s)/functionalised polyorganosiloxane/organo-soluble initiator mixture, in a water/emulsifying agent mixture and polymerizing at a temperature at least equal to that of decomposition of the said initiator.

**11.** Use according to any one of claims 1 to 10, characterised in that the grafted functionalised polyorganosiloxanes are used, in the form of an aqueous dispersion and as antiadhesive agents and water repellents, in a printable, writable and markable coating composition for solid supports.

**12.** Use according to claim 11, characterised in that the aqueous dispersion is used for the production of an antiadhesive coating on a solid support, preferably chosen

- from sheets of polymer material or of paper, cardboard or the like,
- from tapes which are adhesive on their non-adhesive side,
- from intercalating films of double-sided adhesive tapes,
- or from woven or nonwoven fibrous supports and/or composites or non-composites.

**13.** Solid support which is at least partly coated using the aqueous dispersion as defined in claim 12.

FIG.1

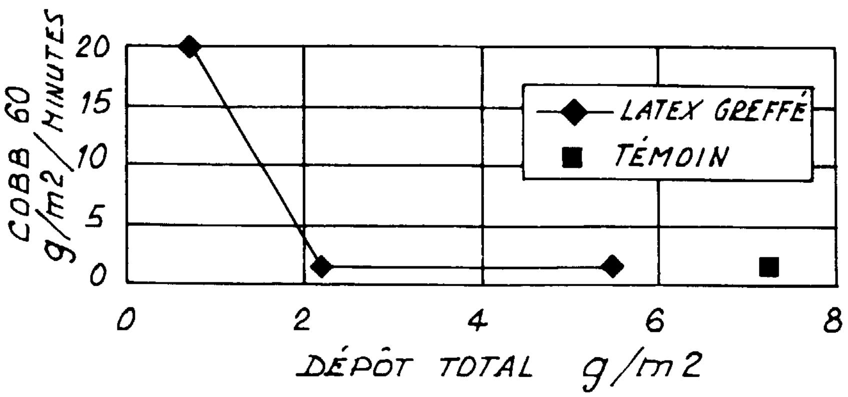
COBB 60
g/m2/MINUTES
20
15
10
5
0
0
2
4
6
8
DÉPÔT TOTAL g/m2
LATEX GREFFÉ
TÉMOIN

FIG.2

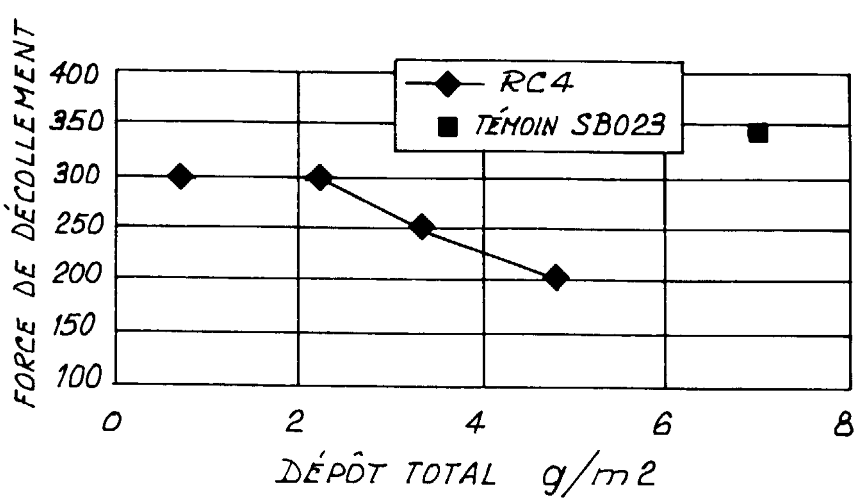
FORCE DE DÉCOLLEMENT
400
350
300
250
200
150
100
0
2
4
6
8
DÉPÔT TOTAL g/m2
RC4
TÉMOIN SB023

FIG. 3

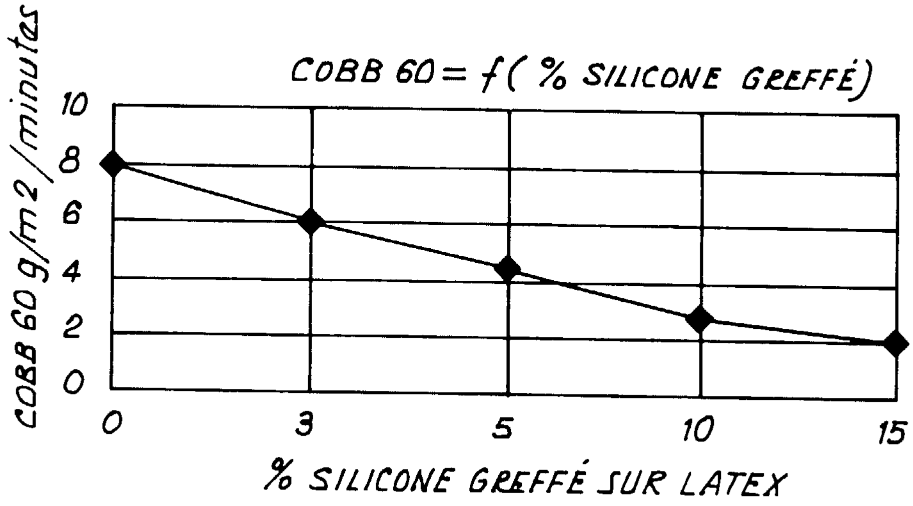
COBB 60 = f( % SILICONE GREFFÉ)
COBB 60 g/m2/minutes
10
8
6
4
2
0
0
3
5
10
15
% SILICONE GREFFÉ SUR LATEX

FIG. 4

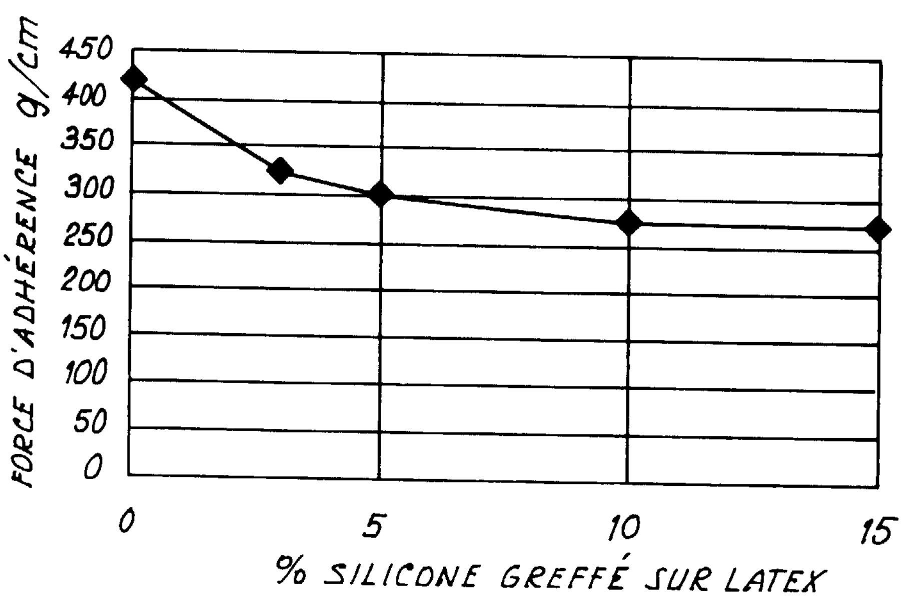
FORCE D'ADHÉRENCE g/cm
450
400
350
300
250
200
150
100
50
0
0
5
10
15
% SILICONE GREFFÉ SUR LATEX